# EUROPÄISCHE PATENTSCHRIFT

(11) **EP 1 764 252 B1**
(45) Veröffentlichungstag und Bekanntmachung des Hinweises auf die Patenterteilung: **07.03.2012**
(21) Anmeldenummer: 06018939.6
(22) Anmeldetag: 11.09.2006
(51) Int. Cl.: F28F 9/00, B62D 25/08, B60K 11/08

(54) **Zarge für ein Kühlmodul eines Kraftfahrzeuges**
Frame for a cooling module of a motor vehicle
Châssis pour module de refroidissement de véhicule automobile

(30) Priorität: 17.09.2005 DE 102005044557
(43) Veröffentlichungstag der Anmeldung: 21.03.2007
(73) Patentinhaber: Behr GmbH & Co. KG, 70469 Stuttgart (DE)
(72) Erfinder: Assis, Mauro, 70435 Stuttgart (DE); Strese, Thomas, Dipl.-Ing., 70195 Stuttgart (DE)
(74) Vertreter: Grauel, Andreas

(56) Entgegenhaltungen:
- EP-A- 0 908 374
- WO-A-03/070503
- GB-A- 2 337 968
- US-A1- 2005 178 604

## Beschreibung

Die Erfindung betrifft eine Zarge für ein Kühlmodul eines Kraftfahrzeuges nach dem Oberbegriff des Patentanspruches 1.

Zargen oder Lüfterzargen werden bei Kühlmodulen oder Kühlmittelkühlern für Kraftfahrzeuge verwendet und dienen einerseits der Führung der von einem Lüfter durch den Kühler oder die Wärmeübertrager angesaugten Kühlluft sowie der Halterung eines Elektromotors, welcher den Lüfter antreibt. Zargen dienen bei Modulen, welche eine Baueinheit von verschiedenen Wärmeübertragern bilden, auch zur Aufnahme und Befestigung der Wärmeübertrager. Hierfür weist die Zarge, welche vorzugsweise als Kunststoffspritzteil ausgebildet ist, einen Rahmen mit angespritzten Befestigungsmitteln auf, wodurch eine einfache Montage der Wärmeübertrager möglich ist. Das Kühlmodul wird im vorderen Bereich des Motorraumes des Kraftfahrzeuges eingebaut und dort gegenüber der Karosserie des Fahrzeuges befestigt. Bei der Montage des Kühlmoduls müssen Leitungen und Schläuche an die einzelnen Wärmeübertrager angeschlossen werden, also beispielsweise Kühlmittelschläuche, Kältemittelleitungen, Ladeluftschläuche oder Ölleitungen. Femer sind elektrische Anschlüsse zu montieren, z. B. für den Elektromotor des Kühlgebläses. In der Regel hat man zunächst das Kühlmodul an seinen vorgesehenen Lagerstellen im Fahrzeug befestigt und anschließend die erforderlichen Schlauch- und Leitungsverbindungen hergestellt. Für die Montage der Anschlüsse muss jedoch hinreichend Platz im Fahrzeug vorhanden sein, was aufgrund beengter Einbauverhältnisse zunehmend nicht mehr der Fall ist.

Die GB 2337968 offenbart eine Zarge für ein Kühlmodul nach dem Oberbegriff des Anspruchs 1.

Es ist Aufgabe der vorliegenden Erfindung, ein Kühlmodul bzw. eine Zarge für ein Kühlmodul derart zu gestalten, dass eine einfache und schnelle Montage, insbesondere die Montage von Anschlüssen für die Wärmeübertrager möglich ist.

Die Aufgabe der Erfindung wird durch die Merkmale des Patentanspruches 1 gelöst. Vorteilhafte Ausgestaltungen der Erfindung ergeben sich aus den Unteransprüchen.

Erfindungsgemäß sind an der Zarge, welche Teil des Kühlmoduls ist und dieses trägt, seitlich abragende Stützelemente lösbar befestigt. Die schwenkbar angeordneten Stützelemente können bei Bedarf, d. h. bei der Montage des Kühlmoduls an der Zarge befestigt, beispielsweise eingesteckt und nach der Montage durch eine einfache Schwenkbewegung wieder entfernt werden. Die Stützelemente stützen sich während der Montage auf Teilen der Fahrzeugkarosserie, insbesondere deren Längsträgern, die sich im Bereich des Kühlmoduls befinden, ab, so dass das Kühlmodul vorübergehend in einer Montageposition gehalten ist. Die Stützelemente sind derart an die Einbauverhältnisse im Fahrzeug angepasst, dass das Kühlmodul während der Montage in einer Position abgesetzt werden kann, welche genügend Raum für die Anschlussarbeiten des Monteurs lässt. Damit wird der Vorteil erreicht, dass eine schnelle und sichere Montage, insbesondere das Anschließen von Schlauch- und Leitungsverbindungen an die Wärmeübertrager ermöglicht wird. Nachdem diese Arbeiten ausgeführt sind werden die Stützhilfen verschwenkt, beigeklappt und/oder entfernt, und das Kühlmodul wird im Fahrzeug an seiner vorgesehenen Lagerposition befestigt.

Seitlich an der Zarge sind Befestigungsansätze in Form von Konsolen zur Aufnahme der Stützelemente vorgesehen, die ihrerseits einen Schwenkzapfen aufweisen. Damit ist ein einfaches Einsetzen der Stützelemente mittels des Schwenkzapfens möglich. Die Stützelemente, welche vorzugsweise um eine etwa senkrechte Achse schwenkbar sind, fungieren somit als aus- und einfahrbare Schwenkarme, wobei der Schwenkbereich zwischen der Montageposition und der Position, in der die Stützelemente entfernt werden, etwa 90° beträgt. Diese Schwenkbewegung und der Ausbau bzw. das Entfernen der Stützelemente wird vom Monteur von Hand ohne Hilfsmittel vorgenommen. Die Stützelemente sind somit wieder verwendbar für ein neues zu montierendes Kühlmodul.

Ein Ausführungsbeispiel der Erfindung ist in der Zeichnung dargestellt und wird im Folgenden näher beschrieben. Es zeigen
- Fig.1: ein Kühlmodul mit erfindungsgemäßen Abstützelementen in der Montageposition,
- Fig. 2: ein einzelnes Stützelement,
- Fig. 3a: einen Ausschnitt des Stützelementes in Montageposition und
- Fig. 3b: das Stützelement gemäß Fig. 3a, jedoch um 90° verschwenkt.

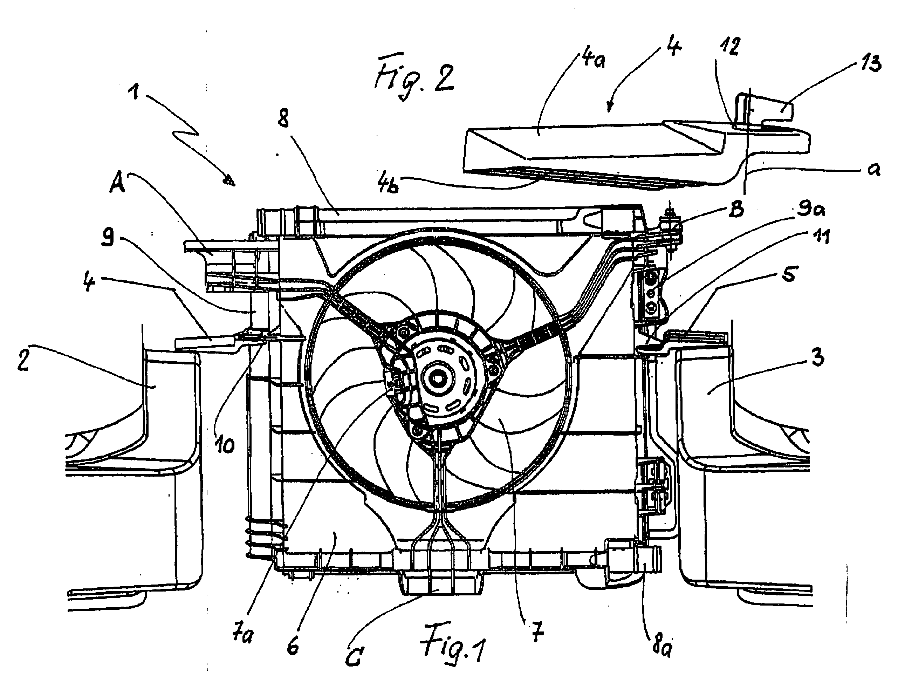

**Fig. 1** zeigt ein Kühlmodul 1 zum Einbau in ein Kraftfahrzeug, von welchem Teile der Karosserie in Form von Längsträgern 2, 3 dargestellt sind. Das Kühlmodul 1 ist über zwei seitlich angeordnete, schwenkbare Abstützelemente 4, 5 gegenüber den Längsträgern 2, 3 abgestützt. Die Abstützung erfolgt vorübergehend für die Montage, d. h. die Stützelemente 4, 5 liegen auf den Längsträgern 2, 3 auf, so dass das Kühlmodul 1 in einer etwa senkrechten Position gehalten ist

Das Kühlmodul 1 weist eine Zarge 6 auf, welche einerseits ein Kühlgebläse 7 und andererseits zwei Wärmeübertrager, einen Kühlmittelkühler 8 sowie einen Kondensator 9, trägt, welche durch die Zarge 6 größtenteils abgedeckt sind. Der Kühlmittelkühler 8 weist einen Kühlmittelanschlussstutzen 8a für den Anschluss an einen nicht dargestellten Kühlmittelkreislauf der Brennkraftmaschine, und der Kondensator 9 weist einen Anschlussflansch 9a für den Anschluss an einen nicht dargestellten Kältemittelkreislauf einer Klimaanlage auf. Der Elektromotor des Kühlgebläses 7 weist einen elektrischen Steckkontakt 7a für die Stromzufuhr auf. Die Zarge 6 weist drei nicht näher erläuterte Lager bzw. Lagerstellen A, B, C auf, über welche das Kühlmodul 1 nach der Montage der Anschlussverbindungen im Fahrzeug befestigt wird. In ihren Seitenbereichen weist die Zarge 6 konsolenartige Befestigungsansätze 10, 11 auf, in welche die schwenkbaren Stützelemente 4, 5 eingesteckt werden.

**Fig. 2** zeigt das schwenkbare Stützelement 4 als Einzelteil, d. h. im ausgebauten Zustand. Das Stützelement 4 ist als Schwenkarm mit einer - im Einbauzustand - etwa senkrecht verlaufenden Schwenkachse a ausgebildet, in deren Bereich ein Schwenkzapfen 12 mit Verriegelungselement 13 angeordnet ist. Der Schwenkarm 4 weist eine obere und eine untere Abstützfläche 4a, 4b auf. Wie Fig. 2 zeigt, können die Stützelemente 4, 5, welche identisch ausgebildet sind, in um 180° verdrehten Positionen an der Zarge 6 befestigt werden. Der Befestigungszapfen 12 wird in eine nicht dargestellte Öffnung der Befestigungskonsole 10 seitlich, d. h. quer zur Schwenkachse a eingeführt und bildet somit ein Schwenklager. In Richtung der Schwenkachse a sichert das Verriegelungselement 13, welches die Befestigungskonsole 10 übergreift, das Stützelement 4. Beide Schwenkarme 4, 5 werden vor der Montage des Kühlmoduls 1 im Fahrzeug an der Zarge 6 angebracht.

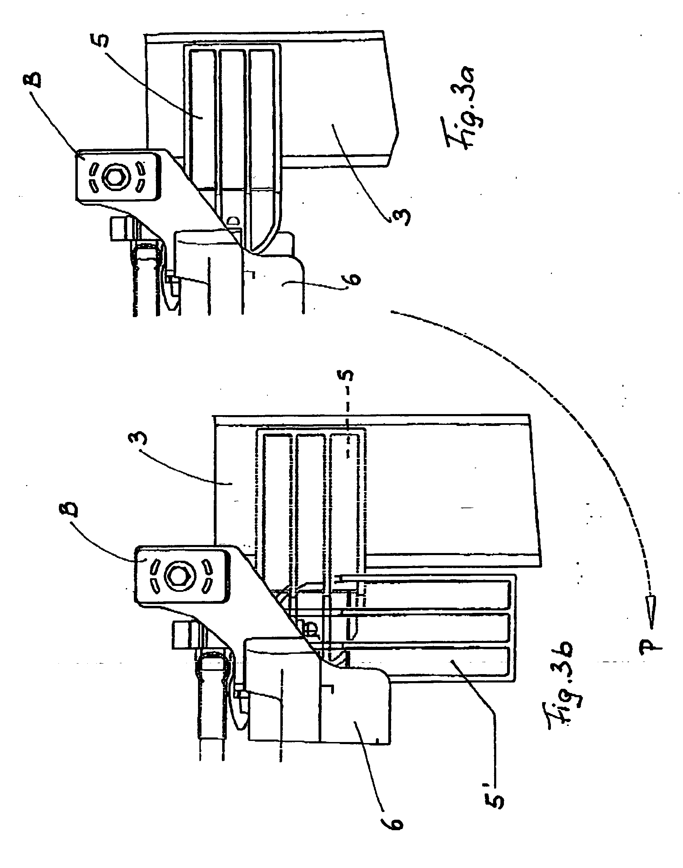

**Fig. 3a** zeigt den Schwenkarm 5 als Ausschnitt in einer Ansicht von oben in Montageposition, d. h. auf dem Längsträger 3 aufliegend. Der Schwenkarm 5 ist unterhalb des Lagers B an der Zarge 6 im Bereich der Nickachse befestigt, so dass das Kühlmodul in einer etwa senkrechten Lage gehalten wird.

**Fig. 3b** zeigt den Schwenkarm 5' in eingeschwenkter Position, d. h. um 90° gegenüber der Position 5 in Fig. 3 a verschwenkt. Der eingeschwenkte Schwenkarm 5' befindet sich somit in einer Position innerhalb der beiden Längsträger und kann entfernt werden. In gleicher Weise kann der Schwenkarm 4 beigeklappt und entfernt werden.

Die Montage und der Einbau des Kühlmoduls 1 erfolgt im Wesentlichen in zwei Schritten: zunächst werden die beiden Schwenkarme 4, 5 an der Zarge 6 befestigt und in ihre seitlich ausgefahrene Stellung gebracht. Dann wird das Kühlmodul 1 über die Schwenkarme 4, 5 auf den Längsträgern 2, 3 derart abgesetzt, dass auf der Seite der Anschlüsse genügend Platz für die Montage verbleibt. Dabei wird beispielsweise ein Kühlmittelschlauch des Kühlmittelkreislaufes mit dem Anschlussstutzen 8a verbunden. Ferner werden die Kältemittelleitungen des Kältemittelkreislaufes mit dem Anschlussflansch 9a des Kondensators verbunden. Schließlich kann auch eine elektrische Steckverbindung mit dem Anschlussstecker 7a für den Elektromotor des Gebläses 7 hergestellt werden. Je nach Aufbau des Kühlmoduls können weitere Anschlüsse in diesem Montageabschnitt montiert werden. Nach Fertigstellung der Anschlussverbindungen wird das Kühlmodul 1 von den Längsträgern 2, 3 abgehoben, die Schwenkarme 4, 5 werden beigeklappt und entfernt, und das Kühlmodul 1 wird in seiner Endposition im Kraftfahrzeug befestigt, beispielsweise über die in Fig. 1 dargestellten Lagerstellen A, B, C.

## Patentansprüche

1. Zarge (6) für ein Kühlmodul (1) eines Kraftfahrzeuges, wobei die Zarge (6) als Träger für mindestens einen Wärmeübertrager (8, 9) und/oder ein Kühlgebläse (7) ausgebildet ist, wobei an der Zarge (6) seitlich abragende Stützelemente (4, 5) lösbar befestigbar sind, wobei die Stützelemente als Schwenkarme (4, 5) mit mindestens einer Abstützfläche (4a, 4b) ausgebildet sind, welche auf einem Karosserieelement, vorzugsweise einem Längsträger (2, 3) des Kraftfahrzeuges abstützbar ist **dadurch gekennzeichnet, daß** die Stützelemente (4, 5) im Bereich ihrer Schwenkachse (a) einen Schwenkzapfen (12) mit einem Verriegelungselement (13) aufweisen.

2. Zarge nach Anspruch 1, **dadurch gekennzeichnet, dass** die Stützelemente (4, 5) schwenkbar angeordnet und aus einer ersten Position (5) zur Montage in eine zweite Position (5') zum Lösen verschwenkbar sind.

3. Zarge nach Anspruch 2, **dadurch gekennzeichnet, dass** die Stützelemente (4, 5) um eine etwa senkrecht angeordnete Schwenkachse (a) verschwenkbar sind.

4. Zarge nach Anspruch 3, **dadurch gekennzeichnet, dass** die Stützelemente (4, 5) um ca. 90° aus der ersten in die zweite Position verschwenkbar sind.

5. Zarge nach Anspruch 1 bis 4, **dadurch gekennzeichnet, dass** die Zarge (6) Befestigungsansätze (10, 11) zur Aufnahme der Schwenkarme (4, 5) bzw. der Schwenkzapfens (12) aufweist.

6. Zarge nach Anspruch 1 bis 5, **dadurch gekennzeichnet, dass** das Verriegelungselement als Hebelarm (13) am Ende des Schwenkzapfens (12) ausgebildet ist und den Befestigungsansatz (10, 11) hintergreift.

7. Zarge nach einem der vorhergehenden Ansprüche, **dadurch gekennzeichnet, dass** die Stützelemente (4, 5) als Kunststoffspritzteile herstellbar sind.

## Claims

1. A frame (6) for a cooling module (1) of a motor vehicle, wherein the frame (6) is embodied as a support for at least one heat exchanges (8, 9) and/or one cooling fan (7), wherein support elements (4, 5) that project outward laterally can be detachably fastened to the frame (6), wherein the support elements are embodied as pivotable arms (4, 5) having at least one support surface (4a, 4b), which can be supported on a chassis element, preferably a longitudinal member (2, 3), of the motor vehicle, **characterized in that** the support elements (4, 5) have a pivot pin (12) with a locking element (13) in the region of the pivoting axis (a) of said support elements.

2. The frame according to claim 1, **characterized in that** the support elements (4, 5) are arranged so as to pivot, and can be pivoted from a first position (5) for installation into a second position (5') for removal.

3. The frame according to claim 2, **characterized in that** the support elements (4, 5) can be pivoted about a pivoting axis (a), which is oriented approximately vertically.

4. The frame according to claim 3, **characterized in that** the support elements (4, 5) can be pivoted approximately 90° from the first position to the second position.

5. The frame according to claims 1 to 4, **characterized in that** the frame (6) has mounting projections (10, 11) for receiving the pivotable arms (4, 5) and/or the pivot pin (12).

6. The frame according to claims 1 to 5, **characterized in that** the locking element is embodied as a lever arm (13) at the end of the pivot pin (12) and engages behind the mounting protection (10, 11).

7. The frame according to any one of the preceding claims, **characterized in that** the support elements (4, 5) can be produced as injection molded plastic parts.

## Revendications

1. Châssis (6) pour un module de refroidissement (1) d'un véhicule automobile, où le châssis (6) est configuré comme un support pour au moins un échangeur de chaleur (8, 9) et / ou un pulser de refroidissement (7), où des éléments supports (4, 5) dépassant latéralement peuvent être fixés de façon amovible sur le châssis (6), où les éléments supports sont configurés comme des bras pivotants (4, 5) comportant au moins une surface d'appui (4a, 4b) qui peut être supportée sur un élément de carrosserie, de préférence un longeron (2, 3) du véhicule automobile,
**caractérisé en ce que** les éléments supports (4, 5) présentent, dans la zone de leur axe de pivotement (a), un tourillon (12) comprenant un élément de verrouillage (13).

2. Châssis selon la revendication 1, **caractérisé en ce que** les éléments supports (4, 5) sont disposés de façon pivotante et orientable, pouvant passer d'une première position (5) de montage, à une deuxième position (5') de détachement.

3. Châssis selon la revendication 2, **caractérisé en ce que** les éléments supports (4, 5) sont orientables en pivotant autour d'un axe de pivotement (a) disposé à peu près verticalement.

4. Châssis selon la revendication 3, **caractérisé en ce que** les éléments supports (4, 5) sont orientables, pivotant d'environ 90° pour passer de la première à la deuxième position.

5. Châssis selon l'une quelconque des revendications 1 à 4, **caractérisé en ce que** le châssis (6) présente des épaulement de fixation (10, 11) servant à loger les bras pivotants (4, 5) ou le tourillon (12).

6. Châssis selon l'une quelconque des revendication 1 à 5, **caractérisé en ce que** l'élément de verrouillage, au niveau de l'extrémité du tourillon (12), est configuré comme un bras à levier (13) et passe derrière l'épaulement de fixation (10, 11).

7. Châssis selon l'une quelconque des revendications précédentes, **caractérisé en ce que** les éléments supports (4, 5) peuvent être fabriqués comme des pièces en matière plastique, moulées par injection,
